**Europäisches Patentamt**

(19) **European Patent Office**

**Office européen des brevets**

(11) Numéro de publication: **0 048 671**
**B1**

(12) **FASCICULE DE BREVET EUROPEEN**

(45) Date de publication du fascicule du brevet:
**12.09.84**

(51) Int. Cl.³: **G 21 C 19/18, G 21 C 19/20**

(21) Numéro de dépôt: **81401453.6**

(22) Date de dépôt: **18.09.81**

(54) **Installation de production d'énergie comportant plusieurs réacteurs nucleaires à neutrons rapides et un dispositif de transfert d'assemblages combustibles.**

(30) Priorité: **22.09.80 FR 8020344**

(43) Date de publication de la demande:
**31.03.82 Bulletin 82/13**

(45) Mention de la délivrance du brevet:
**12.09.84 Bulletin 84/37**

(84) Etats contractants désignés:
**DE FR GB IT**

(56) Documents cités:
**EP - A - 0 034 100**
**DE - A - 2 520 804**
**FR - A - 2 139 707**
**FR - A - 2 188 251**
**FR - A - 2 235 462**
**FR - A - 2 444 996**
**GB - A - 845 456**
**GB - A - 1 083 460**
**LU - A - 42 503**

**ENERGIE NUCLEAIRE, vol. 13 (1977), nr. 3 Paris, FR, mai-juin 1971, E. BENOIST et al.: "La centrale Phénix", "Manutention des éléments combustibles et manutentions spéciales dans le réacteur", pages 196-205 Rapport ACNP-64 503: "Large fast reactor design**

(73) Titulaire: **NOVATOME, 20 Avenue Edouard Herriot, F-92350 Le Plessis Robinson (FR)**

(72) Inventeur: **Plagnard, André, 16 rue du Poitou, F-92120 Montrouge (FR)**

(74) Mandataire: **Bouget, Lucien et al, CREUSOT-LOIRE 15 rue Pasquier, F-75383 Paris Cedex 08 (FR)**

## Description

L'invention concerne une installation de production d'énergie comportant plusieurs réacteurs nucléaires à neutrons rapides et un dispositif de transfert des assemblages combustibles, entre une position de stockage voisine de la cuve des réacteurs et une position d'évacuation et d'introduction de ces assemblages.

Les réacteurs à neutrons rapides refroidis au sodium liquide comportent une cuve de grande dimension à l'intérieur de laquelle est disposé le cœur du réacteur constitué par des assemblages combustibles baignant dans le sodium liquide.

Pour effectuer le rechargement du cœur du réacteur en assemblages combustibles, il est nécessaire de sortir les assemblages combustibles irradiés de la cuve, puis de les disposer dans un château de transport, généralement après une période de stockage plus ou moins longue au cours de laquelle la radioactivité de ces assemblages combustibles diminue, pour leur évacuation vers une unité de retraitement.

Parallèlement à cette évacuation de ces assemblages irradiés, des assemblages neufs sont introduits dans le réacteur nucléaire dans la zone de chargement du cœur où une machine de transfert peut venir les prendre pour les disposer à l'intérieur du cœur à la place des assemblages irradiés.

On dispose donc d'une machine de transfert placée au-dessus du cœur permettant de sortir ou d'introduire les assemblages dans le cœur et de les disposer dans une zone de stockage disposée dans la cuve du réacteur.

On dispose d'autre part d'un sas de transfert comportant deux rampes inclinées qui permet de transporter les assemblages combustibles entre la cuve du réacteur contenant le cœur et une zone de stockage proche de cette cuve où les assemblages peuvent séjourner un temps plus ou moins long au cours duquel leur radio-activité décroît.

Pour leur passage de la zone de stockage au château de transport, les assemblages combustibels doivent être pris en charge par un ensemble complexe de manutention et de conditionnement comportant des ponts roulants ou d'autres machines de manutention. Un tel ensemble complexe est décrit dans le brevet FR-A 2 235 462.

Cet ensemble est implanté dans une partie du réacteur prévue spécialement à cet effet, ce qui augmente l'encombrement du bâtiment du réacteur et le coût de construction de celui-ci.

D'autre part, on envisage actuellement, pour l'implantation des réacteurs nucléaires à neutrons rapides, de grouper plusieurs réacteurs sur un même site, afin de mettre en commun certaines installations annexes ou certains équipements de ces réacteurs.

Dans le cas de réacteurs groupés sur un même site, le dispositif de transfert et de stockage d'assemblages combustibles tel que décrit dans la demande de brevet FR-A 2 475 784 de la Société NOVATOME correspondant à la demande européenne EP-A1-0 034 100 présente un grand intérêt car il simplifie considérablement l'ensemble des dispositifs nécessaires pour l'évacuation des assemblages irradiés vers une usine de retraitement et pour l'approvisionnement du réacteur en assemblages neufs.

Ce dispositif comporte en particulier des modules de transfert et de stockage des assemblages combustibles portés par des véhicules de transport circulant sur le site où sont implantés les réacteurs.

Cependant, dans le cas où un stockage intermédiaire des assemblages combustibles après leur sortie de la cuve du réacteur et avant leur prise en charge par les modules de transfert et de stockage est nécessaire, on doit disposer d'installations spéciales intégrées au bâtiment du réacteur pour le passage des assemblages combustibles entre leur position de stockage au voisinage de la cuve du réacteur et une position d'évacuation à partir de laquelle les assemblages peuvent être pris en charge par le module de transfert.

Le but de l'invention est donc de proposer une installation de production d'énergie comportant plusieurs réacteurs nucléaires à neutrons rapides implantés sur un même site comportant chacun une cuve renfermant le cœur du réactur immergé dans du sodium liquide de refroidissement, une zone de stockage intermédiaire des assemblages combustibles du cœur voisine de la cuve, une zone d'évacuation des assemblages combustibles irradiés et d'introduction des assemblages combutisbles neufs, un puits vertical d'accès à la zone de stockage intermédiaire et un puits vertical d'accès à la zone d'évacuation et d'introduction débouchant l'un et l'autre à leur partie supérieure sur la surface supérieure de la structure du réacteur et un sas de transfert des assemblages combustibles entre le cœur et la zone de stockage intermédiaire voisine de la cuve, l'installation comportant de plus un dispositif de transfert des assemblages combustibles entre la zone de stockage et la zone d'évacuation et d'introduction à partie de laquelle se fait d'évacuation des assemblages combustibles irradiés 5 et l'affrovirionne des réacteurs en assemblages combustibles neufs, cette installation devant permettre une simplification de la structure des réacteurs et une mise en commun entre ces réacteurs du dispositif de transfert des assemblages.

Dans ce but, le dispositif de transfert suivant l'invention est démontable et amovible dans son ensemble pour son utilisation successive sur plusieurs réacteurs nucléaires et comporte:

– une plateforme montée rotative avec interposition d'un joint, sur un support destiné à venir reposer sur la structure du réacteur, la plateforme percée d'au moins une ouverture étant alors horizontale et mobile autour d'un axe vertical pour mettre successivement l'ouverture en concordance avec les puits verticaux qui sont munis, à leur partie supérieure de dispositifs de fermeture et de jonction,

– au moins une hotte pouvant contenir un assemblage combustible en position verticale, disposée sur la surface supérieure de la plateforme autour de l'ouverture ménagée dans celle-ci et munie d'un treuil de déplacement vertical des assemblages combustibles à l'intérieur des puits et de la hotte, lorsque ceux-ci viennent dans le prolongement l'un de l'autre par rotation de la plateforme,

– et au moins un dispositif de jonction porté par la plateforme pour le raccordement entre la hotte et les puits lorsque ceux-ci viennent en concordance.

Afin de bien faire comprendre l'invention, on va maintenant décrire à titre d'exemple non limitatif, en se référant aux figures jointes en annexe, deux modes de réalisation d'un dispositif de transfert d'une installation suivant l'invention comportant plusieurs réacteurs nucléaires à neutrons rapides.

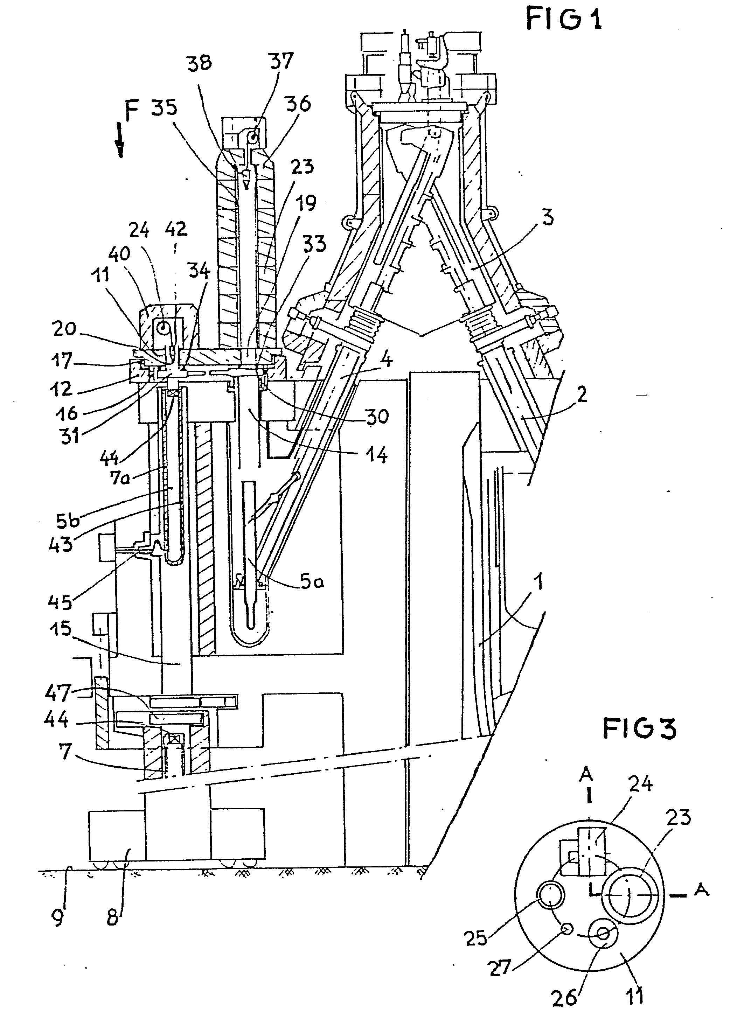

La figure 1 représente, dans une vue en coupe verticale brisée suivant A-A de la figure 3, une chaîne de manutention des assemblages combustibles comportant un dispositif de transfert et dans laquelle les assemblages combustibles sont transférés depuis l'extrémité de la rampe secondaire du sas de chargement-déchargement jusqu'à un module de transfert.

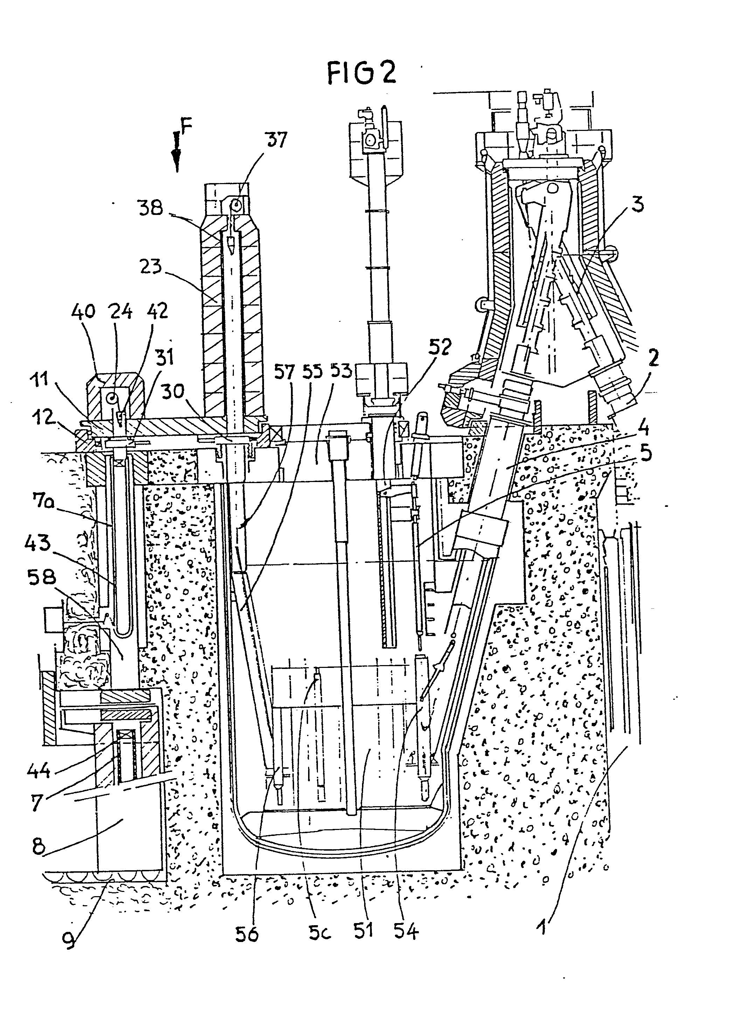

La figure 2 représente, dans une vue en coupe verticale brisée suivant AA de la figure·3, une chaîne de manutention d'assemblages combustibles comportant un dispositif de tranfert et dans laquelle les assemblages combustibles sont transférés depuis une capacité de stockage intermédiaire jusqu'à un module de transfert.

La figure 3 représente une vue suivant F de la figure 1 ou de la figure 2.

Sur la figure 1, on voit la cuve 1 du réacteur nucléaire renfermant le cœur de celui-ci à l'intérieur de laquelle pénètre la rampe primaire 2 communiquant avec le sas de chargement-déchargement 3 permettant le passage des assemblages combustibles depuis la rampe primaire 2 jusqu'à la rampe secondaire 4 pour amener l'assemblage combustible 5 dans sa position de stockage intermédiaire 5a à la base de rampe secondaire 4.

Le dispositif de transfert amovible suivant l'invention permet de faire passer l'assemblage 5 de sa position de stockage intermédiaire 5a à une position 5b à l'intérieur d'un module de transfert 7 en position d'évacuation.

Le dispositif de transfert amovible suivant l'invention permet de plus de disposer le module 7 à l'intérieur du chariot de transport 8 se/déplaçant sur une voie de roulement 9 à la partie inférieure de la structure du réacteur.

Le dispositif de transfert comporte une plateforme tournante 11 montée rotative autour d'un axe vertical sur un support 12 reposant sur la strucutre du réacteur au-dessus de puits d'accès 14 et 15 ménagés dans la structure du réacteur à la verticale de la position de stockage 5a des assemblages combustibles à la base de la rampe secondaire 4 et à la verticale de la position de chargement du module de transfert.

La plateforme 11 est montée rotative sur le support 12 par l'intermédiaire d'un palier à billes 16 et un dispositif d'étanchéité 17 permet d'isoler la zone d'espace située en-dessous de la plateforme et en communication avec les puits ménagés dans la structure du réacteur de l'atmosphère extérieure.

La plateforme 11 est percée d'ouvertures telles que 19 et 20 visibles à la figure 1 et porte un ensemble de dispositifs visibles aux figures 1 et 3.

Chacun de ces dispositifs est placé à l'aplomb d'une ouverture telle que 19 et 20 traversant la plateforme 11 et mettant en communication le dispositif avec l'un des puits verticaux 14 et 15 ménagés dans la structure du réacteur, suivant la position de la plateforme par rapport à ces puits verticaux.

En effet, le déplacement en rotation de la plateforme autour de son axe vertical de rotation permet de mettre successivement en concordance les différentes ouvertures et les différents dispositifs avec les puits verticaux 14 et 15. Les dispositifs portés par la plateforme 11 comprennent une hotte à assemblages irradiés 23, un treuil à module 24, une hotte pour les assemblages neufs 25 et un dispositif d'ouverture et de fermeture des modules 26.

Une ouverture a, de plus, été prévue pour le passage d'un périscope 27 permettant l'observation des assemblages transportés en vue de leur identification et leur orientation avant introduction dans le réacteur.

Un dispositif moteur non représenté permet de faire tourener la plateforme 11 autour de son axe pour mettre en coïncidence les diverses ouvertures correspondant aux dispositifs 23-24-25-26 et 27 avec la partie supérieure des puits 14 et 15.

A leur partie supérieure, les puits 14 et 15 sont fermés par des vannes 30 et 31 respectivement alors que la partie inférieure de la plateforme 11 porte des dispositifs de jonction tels que 33 et 34 constitués par un dispositif comprenant un joint d'étanchéité destiné à venir en position de jonction sur la face supérieure de la vanne 30 ou 31.

De cette manière, lorsque la plateforme est dans une position telle que représentée à la figure 1, la hotte 23 pour les assemblages irradiés et le treuil à module 24 étant en position au-dessus des puits 14 et 15 respectivement, les dispositifs de jonction 33 et 34 permettent une jonction étanche entre l'intérieur de la hotte 23 ou l'intérieur du logement du treuil 24 et les puits verticaux 14 et 15 disposés à l'aplomb des positions de stockage et d'évacuation de l'assemblage 5.

La hotte pour éléments irradiés 23 est constituée par une enveloppe interne tubulaire 35 recouverte par une enveloppe de protection 36 à l'intérieur de laquelle est disposé, à sa partie supérieure, un treuil 37 permettant le déplacement vertical de l'assemblage 5 dans l'espace constitué par la hotte et le puits 14, lorsque la vanne 30 est ouverte.

Une pince 38 disposée à l'extrémité du câble du treuil permet l'accrochage de l'élément combustible 5 en position 5a et sa remontée à l'intérieur de la hotte 23 dont la hauteur est prévue pour qu'elle puisse contenir un assemblage 5.

La hotte pour assemblage neufs 25 est identique à la hotte 23, à ceci près qu'elle ne comporte pas une paroi épaisse de protection contre les radiations analogue à la paroi épaisse 36.

Le treuil à module 24 est disposé à l'intérieur d'un carter 40 dont la paroi épaisse permet un isolement contre les radiations.

Une pince de manutention 42 fixée à l'extrémité du câble du treuil permet un accrochage des modules 7 pour leur déplacement à l'intérieur du puits 15 jusque dans leur position de chargement à l'intérieur du chariot de transport 8.

Les modules 7 comportent une enveloppe 43 d'une dimension suffisante pour contenir un assemblage combustible, fermée par un bouchon 44 dont l'ouverture ou la fermeture peuvent être assurées par l'outil associé au dispositif d'ouverture et de fermeture des modules 26.

Le fonctionnement du dispositif selon l'invention est le suivant:

Avant d'effectuer une opération de transfert, le dispositif est amené dans sa position de service où le support 12 repose sur la structure du réacteur de façon à ce que le treuil à module se trouve au-dessus du puits 15.

Le support 12 est fixé sur la structure du réacteur grâce à des dispositifs de fixation amovibles est la plateforme est mise, grâce à son dispositif de déplacement, dans sa position représentée à la figure 1.

Simultanément le module qui contient alors un assemblage neuf est amené par le chariot de déplacement 8 en-dessous du canal vertical 15 puis, dans sa position 7a, où il est maintenu en place par un dispositif de blocage 45, par le treuil à module 24 et son élément de préhension 42.

Le module est alors ouvert.

On fait alors tourner la plateforme 11 de 90° pour amener la hotte 23 au-dessus du puits 14 et la hott 25 au-dessus du puits 15.

L'assemblage neuf contenu dans le module en 7a et l'assemblage irradié placé en position 5a sont levés simultanément dans chacune des hottes.

La plateforme 11 tourne alors de 180° de manière à amener l'assemblage irradié à l'aplomb du puits 15 et l'assemblage neuf à l'aplomb du puits 14.

Les deux assemblages sont alors redescendus, l'assemblage irradié dans le module en 7a et l'assemblage neuf en 5a. Ce dernier pourra grâce aux rampes être replacé dans le réacteur.

Une nouvelle rotation de 90° de la plateforme 11 ramènera le treuil à module à l'aplomb du canal 14. Le module est refermé. Il peut donc grâce à ce treuil être replacé dans le chariot 8 qui l'évacuera du réacteur.

La chaîne de manutention des assemblages combustibles représentée à la figure 2 est identique à la chaîne représentée aux figures 1 et 3, à ceci près qu'une cuve de stockage intermédiaire des assemblages irradiés 51 est disposée au voisinage de la cuve 1 du réacteur pour le stockage d'un grand nombre d'assemblages irradiés après leur extraction du cœur et leur sortie de la cuve du réacteur, pour la décroissance de leur radio-activité.

La rampe secondaire 4 débouche dans la cuve de stockage 51 où un dispositif de manutention 52 permet l'extraction de l'assemblage 5 du pot de transport 54 de la rampe 4 et le transport de l'assemblage irradié 5 en une position 5c dans la structure de stockage des assemblages disposée à l'intérieur de la cuve 51.

La structure de stockage des assemblages est fixe et le dispositif de manutention 52 est implanté sur un bouchon tournant 53 solidaire d'un dispositif moteur de mise en rotation non représenté.

De cette façon on peut remplir grâce au dispositif de manutention 52 et au bouchon tournant 53 du dispositif 51, l'ensemble des positions de stockage de cette structure.

Une rampe 55 débouche à sa partie inférieure au niveau de la structure de stockage des assemblages irradiés. Un étui de stockage 56 est articulé à l'extrémité de cette rampe.

Les assemblages 5 en position de stockage 5c peuvent être placés grâce à l'outil de manutention 52 dans l'étui 56 à l'intérieur duquel ils peuvent être pris en charge par l'outil de préhension 38 du treuil 37 de la hotte à assemblages combustibles irradiés 23.

Le dispositif de transfert suivant l'invention disposé au-dessus des puits verticaux 57 et 58 communiquant pour l'un avec la rampe 55 et pour l'autre avec l'emplacement de chargement du chariot de transfert 8 peut donc effectuer le transfert des éléments combustibles irradiés entre la cuve de stockage 51 et le module 7 en position 7a dans le canal 58.

Les autres fonctions déjà décrites pour le dispositif représenté à la figure 1 peuvent être également effectuées par le dispositif de transfert représenté à la figure 2.

La cuve de stockage 51 permet un stockage intermédiaire des assemblages, entre leur sortie de la cuve du réacteur et leur transport grâce au module 7 et au chariot 8, d'une durée suffisante pour que la radio-activité de ces assemblages ait décru d'une quantité importante.

Le support 12 sur lequel est disposée la plateforme 11 étant amovible par rapport à la structure du réacteur, l'ensemble du dispositif de transfert peut être transporté d'un endroit à un autre sur la structure du réacteur au niveau de puits communiquant avec des positions de stockage et d'évacuation des assemblages combustibles. Dans l'installation suivant l'invention comportant plusieurs réacteurs nucléaires disposés sur un même site, le dispositif de transfert peut être utilisé indifféremment sur l'un ou l'autre des réacteurs. Cette mise en commun du dispositif de transfert permet de réduire le coût de construction des réacteurs nucléaires et de diminuer la durée s'écoulant entre deux utilisations successives du dispositif de transfert, ce qui augmente la fiabilité de la chaîne de transfert des assemblages.

D'autre part, le dispositif de transfert suivant l'invention permet de supprimer un ensemble complexe intégré à la structure du réacteur qui en augmentait l'encombrement et le coût de construction.

Mais l'invention ne se limite pas aux modes de réalisation qui ont été décrits; elle en comporte au contraire toutes les variantes.

C'est ainsi qu'on a décrit un dispositif adapté au cas où le transfert des assemblages combustibles se fait à l'intérieur de modules qui peuvent être placés sur des chariots de transport, mais qu'il est également possible d'utiliser le dispositif suivant l'invention dans le cas où de tels modules ne sont pas utilisés.

Dans ce cas, la plateforme pourrait porter uniquement une hotte pour assemblages irradiés et une hotte pour assemblages neufs ou même éventuellement une seule hotte pour le transfert des assemblages.

On peut également imaginer d'autres dispositifs portés par la plateforme pour effectuer des manutentions ou des travaux spéciaux sur les assemblages ou leurs conteneurs de transport.

Enfin, bien que le dispositif de transfert suivant l'invention soit particulièrement bien adapté au cas d'un ensemble de réacteurs nucléaires à neutrons rapides regroupés sur un même site, il est possible également de l'utiliser pour l'exploitation d'un réacteur nucléaire à neutrons rapides isolé.

## Revendications

1. Installation de production d'énergie comportant plusieurs réacteurs nucléaires à neutrons rapides implantés sur un même site comportant chacun une cuve (1) renfermant le cœur du réacteur immergé dans du sodium liquide de refroidissement, une zone de stockage intermédiaire des assemblages combustibles du cœur voisine de la cuve (1), une zone d'évacuation des assemblages combustibles irradiés et d'introduction des assemblages combustibles neufs, un puits vertical (14) d'accès à la zone de stockage intermédiaire et un puits vertical (15) d'accès à la zone d'évacuation et d'introduction débouchant l'un et l'autre, à leur partie supérieure, sur la surface supérieure de la structure du réacteur et un sas (3) de transfert des assemblages combustibles entre le cœur et la zone de stockage intermédiaire voisine de la cuve (1), l'installation comportant de plus un dispositif de transfert des assemblages combustibles entre la zone de stockage et la zone d'évacuation et d'introduction à partie de laquelle ne fait l'évacuation des assemblages combustibles irradiés (5) et l'affroviriennement des réacteurs en assemblages combustibles neufs, caractérisée par le fait que le dispositif de transfert des assemblages combustibles entre la zone de stockage et la zone d'évacuation est démontable et amovible dans son ensemble pour son utilisation successive sur les différents réacteurs nucléaires et qu'il comporte:

– une plateforme (11) montée rotative avec interposition d'un joint (17) sur un support (12) destiné à venir reposer sur la surface supérieure de la structure du réacteur, la plateforme (11) percée d'au moins une ouverture (19, 20) étant alors horizontale et mobile en rotation autour d'un axe vertical pour mettre successivement l'ouverture (19, 20) en concordance avec les puits verticaux (14, 15) qui sont munis à leur parite supérieure de dispositifs de fermeture et de jonction (30, 31),

– au moins une hotte (23) pouvant contenir un assemblage combustible en position verticale, disposée sur la surface supérieure de la plateform (11) autour de l'ouverture (19) ménagée dans celle-ci et munie d'un treuil (37) de déplacement vertical des assemblages combustibles à l'intérieur des puits (14, 15) et de la hotte (23), lorsque ceux-ci viennent dans le prolongement l'un de l'autre par rotation de la plateform,

– et au moins un dispositif de jonction (33, 34) porté par le plateforme pour le raccordement entre la hotte (23) et les puits (14, 15) lorsque la hotte vient en concordance avec ceux-ci.

2. Installation selon la revendication 1, dans le cas où le transport des assemblages combustibles se fait dans des modules (7) portés par des chariots de transport (8), caractérisé par le fait que la plateforme (11) porte en plus de la hotte (23) un treuil de manutention des modules (24) et un dispositif d'ouverture et de fermeture de ces modules (26).

3. Installation selon l'une quelconque des reventicications 1 et 2, caractérisée par le fait que la plateforme (11) porte deux hottes dont l'une (23) destinée aux assemblages combustibles irradiés comporte une paroi d'isolation (36) contre les rayonnements de forte épaisseur et dont l'autre (25) est destinée aux assemblages combustibles neufs.

4. Installation suivant l'une quelconque des revendications 1, 2 et 3, caractérisée par le fait que la zone de stockage intermédiaire des assemblages combustibles (5) est une structure (51) de stockage des assemblages combustibles irradiés (5) de grande capacité.

## Patentansprüche

1. Energieerzeugungsanlage bestehend aus mehreren auf dem selben Gelände errichteten schnellen Neutronenreaktoren mit jeweils einem Druckbehälter (1), der den in flüssigem Kühlnatrium eingetauchten Reaktorkern enthält, einer dem Druckbehälter (1) benachbarten Zwischenlagerungszone der Brennelementbündel des Kerns, einer Zone zum Abtransport der bestrahlten Brennelementbündel und zum Beschicken der neuen Brennelementbündel, einem senkrechten Zugangsschacht (14) zu der Zwischenlagerungszone und einem senkrechten Zugangsschacht (15) zu der Abtransport- und Beschickungszone, die jeweils an ihrem Oberteil an der Oberfläche der Reaktorstruktur ausmünden, und einer Schleuse (3) zur Übergabe der Brennelementbündel zwischen dem Reaktorkern und der dem Druckbehälter (1) benachbarten Zwischenlagerungszone, wobei die Anlage zusätzlich eine Vorrichtung zur Übergabe der Brennelementbündel zwischen der Lagerungszone und der Abtransport- und Beschikkungszone umfasst, in welcher die bestrahlten Brennelementbündel (5) abgeführt und die Reaktoren mit neuen Brennelementbündel beschickt werden, dadurch gekennzeichnet, dass die Vorrichtung zur Übergabe der Brennelementbündel zwischen der Lagerungszone und der Abtransportzone zu deren nachfolgenden Einsatz an den einzelnen Kernreaktoren als Einheit demontierbar und abnehmbar ist, wobei diese folgende Teile umfasst:

— eine Plattform (11), die unter Einfügung einer Dichtung (17) drehbar auf einer auf der Oberfläche der Reaktorstruktur zur Auflage kommenden Abstützung (12) montiert ist, wobei die mindestens eine Bohrung (19, 20) aufweisende Plattform (11) dann in der waagrechten Lage und um eine Senkrechtachse drehbeweglich ist damit die Öffnung (19, 20) nacheinander mit den an ihrem Oberteil Verschliess- und Verbindungsvorrichtungen (30, 31) aufweisende Senkrechtschächten (14, 15) übereinstimmt,

— mindestens eine um die Öffnung (19) der Plattform (11) an der Oberfläche der selben angeordnete Haube (23) zur Aufnahme eines Brennelementbündels in senkrechter Lage, die eine Winde (37) aufweist zum senkrechten Verfahren der Brennelementbündel innen in den Schächten (14, 15) und in der Haube (23) wenn diese durch Drehen der Plattform übereinander fluchten,

— und mindestens eine durch die Plattform abgestützte Verbindungsvorrichtung (33, 34) zur Herstellung der Verbindung zwischen der Haube (23) und den Schächten (14, 15) wenn die Haube lagenmässig mit den letzteren übereinstimmt.

2. Anlage nach Anspruch 1, bei welcher der Transport der Brennelementbündel in durch Transportwagen (8) getragene Modulen (7) erfolgt, dadurch gekennzeichnet, dass die Plattform (11) ausser der Haube (23) eine Winde (24) zum Handhaben der Module und eine Vorrichtung (26) zum Öffnen und Schliessen dieser Module trägt.

3. Anlage nach einem der Ansprüche 1 und 2, dadurch gekennzeichnet, dass die Plattform (11) zwei Hauben aufweist, wobei die eine (23) für die bestrahlten Brennelementbündel eine starke Isolationswand (36) gegen Strahlungen umfasst und die andere (25) für die neuen Brennelementbündel bestimmt ist.

4. Anlage nach einem der Ansprüche 1, 2 und 3, dadurch gekennzeichnet, dass die Zwischenlagerungszone der Brennelementbündel (5) eine Grossraum-Lagerstruktur (51) der bestrahlten Brennelementbündel (5) ist.

## Claims

1. Plant for energy production comprising several fast neutron nuclear reactors located at the same site each comprising a vessel (1) enclosing the reactor cor immersed in liquid sodium for cooling, a zone for intermediate storage of the core fuel assemblies close to the vessel (1), a zone for removal of irradiated fuel assemblies and for the insertion of new fuel assemblies, a vertical well (14) for access fot the intermediate storage zone and a vertical well (15) for access to the removal and insertion zone, both opening, in their upper part, onto the upper surface of the reactor structure and a lock chamber (3) for transferring the fuel assemblies between the core and the intermediate storage zone close to the vessel (1), the plant moreover comprising a device for transferring the fuel assemblies between the storage zone and the removal and insertion zone from which zone the removal of the irradiated fuel assemblies (5) and the provisioning of new fuel assemblies for the reactors are carried out, characterised in that the device for transferring the fuel assemblies between the storage zone and the removal zone is capable of being demounted ans removed as a whole for use in turn on the various nuclear reactors ans in that is comprises:

— a platform (11) mounted capable of rotating, with a seal (17) being interposed, on a support (12) intended to rest on the upper surface of the reactor structure, the platform (11) which is pierced by at least one opening (19, 20) then being horizontal ands movable in rotation around a vertical axis to place the opening (19, 20) successively in correspondence with the vertical wells (14, 15) which are equipped in their upper part with devices for closing and connecting (30, 31),

— at least one hood (23) capable of containing a fuel assembly in a vertical position, arranged on the opper surface of the platform (11) around the opening (19) provided in the latter and equipped with a hoist (37) for vertical movement of the fuel assemblies inside the wells (14, 15) and the hood (23), when the latter are placed into a mutual extension by rotation of the platform, and

— at least one connecting device (33, 34) carried by the platform for the conncetion between the hood (23) and the wells (14, 15) when the hood comes into correspondence with the latter.

2. Plant according to claim 1, in the case where the transport of fuel assemblies is carried out in modules (7) carried by transport trolleys (8), characterised in that the platform (11) carries, in addition to the hood (23), a hoist for handling the modules (24) and a device for opening and closing these modules (26).

3. Plant according to either of claims 1 ans 2, characterised in that the platform (11) carries two hoods one (23) of which is intended for the irradiated fuel assemblies and comprises a thick wall (36) for insulation agianst the radiations, and the other (25) is intended for the new fuel assemblies.

4. Plant according to any one of claims 1, 2 and 3, characterised in that the zone for intermediate storage of the fuel assemblies (5) is a structure (51) for storage of irradiated fuel assemblies (5) of a large capacity.

0 048 671

FIG 1

FIG 3

7

FIG 2